# FASCICULE DE BREVET EUROPEEN

(11) **EP 1 094 185 B1**
(45) Date de publication et mention de la délivrance du brevet: **04.08.2004**
(21) Numéro de dépôt: 00402851.0
(22) Date de dépôt: 16.10.2000
(51) Int. Cl.: E05F 3/20, E05F 5/00, E05F 5/10

(54) **Charnière à freinage hydraulique**
Scharnier mit hydraulischer Bremse
Hinge with hydraulic brake

(30) Priorité: 18.10.1999 FR 9912947
(43) Date de publication de la demande: 25.04.2001
(73) Titulaire: Pinet Industrie, 95971 Roissy CDG (FR)
(72) Inventeur: Lansardiere, Guy, 93150 Blanc Mesnil (FR)
(74) Mandataire: Le Bras, Hervé

(56) Documents cités:
- EP-A- 0 681 080
- FR-A- 691 906
- FR-A- 2 393 911
- US-A- 3 408 683
- US-A- 5 016 317

## Description

L'invention concerne le domaine des charnières à amortissement hydraulique qui comportent un charnon fixe solidaire d'un dormant et un charnon mobile solidaire d'un ouvrant et un dispositif hydraulique pour freiner le mouvement de rotation du charnon mobile par rapport au charnon fixe dans un sens qui correspond en général au sens de fermeture de l'ouvrant.

Ces dispositifs hydrauliques équipent souvent les charnières de portes qui, après avoir été ouvertes, reviennent automatiquement à leur positions de fermeture. L'ouverture de la porte nécessite des efforts peu élevés, mais suffisants pour comprimer un ressort de rappel. Le ressort de rappel a tendance à refermer automatiquement la porte, et pour éviter que celle-ci ne claque à la fermeture, on équipe la charnière d'un dispositif hydraulique de freinage. Le ressort de rappel peut être logé dans la charnière ou disposé en dehors de la charnière.

FR 2 393 911 décrit une charnière à fermeture automatique dans laquelle l'ouverture de la porte entraîne un léger soulèvement de la porte, et celle-ci revient vers sa position de fermeture sous l'action de son propre poids. Cette disposition permet de supprimer le ressort de rappel.

EP 0 251 972 sur lequel repose le préambule de la revendication 1, décrit une autre charnière à fermeture automatique qui inclut à la fois le ressort de rappel et le dispositif hydraulique de freinage.

Dans ces deux documents, les charnons sont fixés à demeure sur le dispositif hydraulique, ce qui entraîne des difficultés pour l'entretien et les réparations éventuelles, car il est nécessaire de démonter les charnons pour accéder aux pièces du dispositif de freinage.

Le but de la présente invention est de pallier ces difficultés.

L'invention concerne donc un dispositif hydraulique pour freiner le mouvement de rotation d'un charnon mobile d'une charnière par rapport à un charnon fixe dans un sens.

Selon l'invention, ce dispositif comporte :
un corps de cylindre solidaire du charnon fixe, une broche montée à rotation sur le corps de cylindre et immobilisée axialement par rapport à ce dernier, ladite broche présentant, à l'extérieur du corps de cylindre, une partie externe solidaire du charnon mobile et, à l'intérieur du corps de cylindre, une partie filetée, un piston monté coulissant dans la cavité interne du corps de cylindre et immobilisé en rotation par rapport au corps de cylindre, ledit piston partageant ladite cavité en deux chambres de volume variable, ce piston comportant un filetage interne coopérant avec la partie filetée de la broche, et des moyens pour permettre un transfert de fluide hydraulique entre les deux chambres, lors du déplacement du piston par suite de la rotation du charnon mobile, de manière contrôlée dans un sens de rotation du charnon mobile et de manière libre dans l'autre sens,
et est caractérisé par le fait qu'il se présente sous la forme d'une cartouche amovible séparable des charnons, le corps de cylindre et la partie de broche située à l'extérieur du corps de cylindre comportant des surfaces périphériques ayant des génératrices sensiblement parallèles à l'axe de la broche, et des contours non circulaires dans des plans perpendiculaires à l'axe de la broche, lesdites surfaces périphériques étant destinées à coopérer avec des surfaces internes complémentaires formées respectivement dans le charnon fixe et le charnon mobile, ladite cartouche jouant ainsi également le rôle d'axe de l'articulation.

Ainsi, la cartouche joue à la fois le rôle d'un axe d'articulation et le rôle d'un dispositif de freinage du mouvement des charnons entre eux.

Avantageusement, le corps de cylindre est susceptible d'être immobilisé dans la charnon fixe au moyen d'une rainure coopérant avec une nervure. La nervure est formée, de préférence, sur le corps de cylindre. La partie de broche située à l'extérieur du corps de cylindre se présente sous la forme d'un fût cannelé.

Selon une autre caractéristique de l'invention, le dispositif comporte en outre des moyens pour immobiliser la broche dans une position extrême de rotation du charnon mobile.

Les moyens d'immobilisation de la broche comportent un évidement annulaire formé sur une face d'extrémité du piston, qui s'encliquette avec une partie mâle correspondante formée sur la broche.

La broche comporte dans la cavité du corps de cylindre un épaulement annulaire en appui contre un bouchon de fermeture du corps de cylindre, traversé par la broche, et la partie mâle s'étend à partir dudit épaulement annulaire.

Les moyens pour permettre le transfert du fluide hydraulique comportent des orifices ménagés dans le piston et un clapet, sous forme de rondelle, fixé sur une face d'extrémité du piston.

Selon encore une autre caractéristique de l'invention, les éléments constitutifs de la cartouche sont réalisés en une matière plastique synthétique.

Dans ce cas, le bouchon est avantageusement fixé au corps de cylindre par une soudure à ultrasons. Le clapet est également fixé au piston par une soudure à ultrasons.

D'autres avantages et caractéristiques de l'invention ressortiront à la lecture de la description suivante faite à titre d'exemple non limitatif et en référence aux dessins annexés dans lesquels :
la figure 1 est une coupe selon un plan passant par l'axe de rotation de la broche d'un dispositif hydraulique de freinage conforme à l'invention et monté sur un charnon fixe et un charnon mobile ;
la figure 2 est une vue en perspective de la broche ;
la figure 3 est une vue éclatée du dispositif hydraulique conforme à l'invention ; et
la figure 4 est une vue en perspective du piston.

Les dessins montrent un dispositif hydraulique de freinage 1, sous forme d'une cartouche amovible dont une extrémité loge dans une première cavité ménagée dans un charnon fixe 2 et dont l'autre extrémité loge dans une deuxième cavité ménagée dans un charnon mobile 3.

Cette cartouche, de forme globalement cylindrique et d'axe géométrique 4, comporte un corps de cylindre 5 de révolution autour de l'axe 4, qui présente sur sa paroi périphérique externe une nervure 7, parallèle à l'axe 4, qui loge dans une rainure 8 ménagée dans la paroi délimitant la cavité du charnon fixe 2. La coopération entre la nervure 7 et la rainure 8 immobilise en rotation, autour de l'axe 4, le corps de cylindre 5 par rapport au charnon fixe 2.

Le corps de cylindre 5, réalisé en une seule pièce, est obturé à l'une de ses extrémités par un fond 9 qui présente sur sa face interne un alésage borgne 10, d'axe 4. Deux rainures 11a,11b parallèles à l'axe 4 sont en outre ménagées sur la paroi cylindrique interne du corps de cylindre 5.

Le corps de cylindre 5 présente en outre, à l'autre extrémité, un bouchon de fermeture 13, lequel comporte un alésage 14, d'axe 4, ayant un diamètre inférieur au diamètre de la cavité interne 15 du corps de cylindre 5.

L'alésage 14 et l'alésage borgne 10 servent de paliers à une broche 16, d'axe 4, qui comporte, à l'extérieur du corps de cylindre 5, un fût cannelé 17 dont les cannelures 18 coopèrent avec des rainures ménagés en correspondance dans la deuxième cavité ménagée dans le charnon mobile 3. Ces cannelures 18 et ces rainures permettent d'immobiliser en rotation le charnon mobile 3 par rapport à la broche 16. On comprend aisément que la rotation du charnon mobile 3 autour de l'axe 4 entraîne la rotation de la broche 16 autour de l'axe 4. Une extrémité 19 de la broche 16 loge à rotation dans l'alésage borgne 10, et la broche 16 comporte au voisinage de la face interne du bouchon de fermeture 13, un épaulement annulaire 20 ayant un diamètre sensiblement égal au diamètre de la cavité interne 15 du corps de cylindre 5. Un joint d'étanchéité 21 est interposé entre l'épaulement annulaire 20 et le bouchon de fermeture 13.

La partie de broche 2 qui s'étend dans la cavité interne 15 du corps de cylindre 5, entre l'épaulement annulaire 20 et l'extrémité de broche 19 logeant dans l'alésage borgne 10, présente un filetage 23 à grand pas de vis dont l'utilité sera expliquée plus loin.

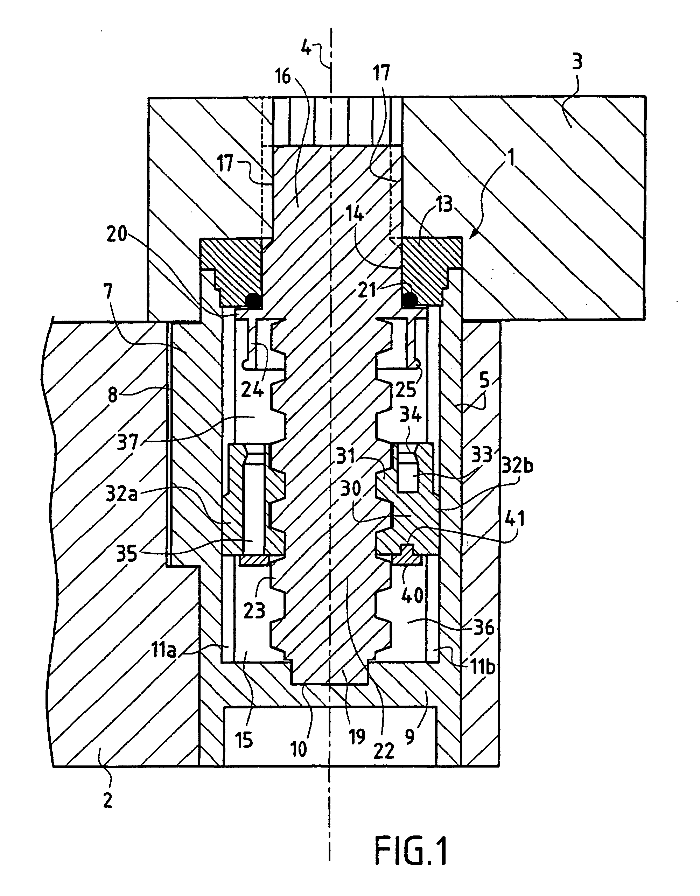

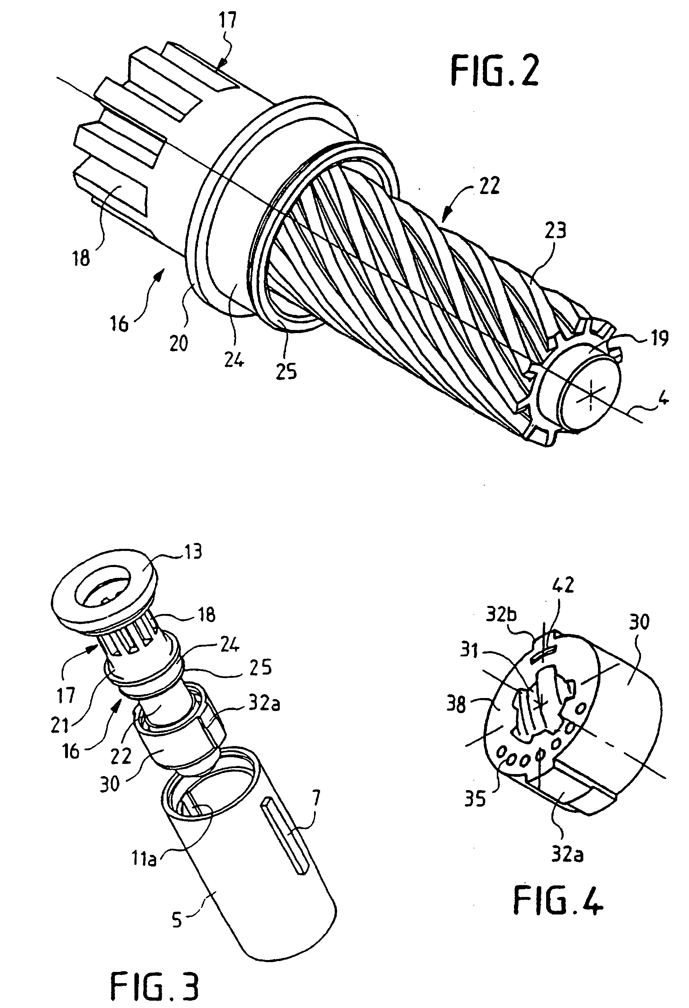

Comme on le voit très clairement sur les figures 1 et 2, une partie mâle 24, sous forme d'un manchon, d'axe 4, s'étend dans la cavité interne 15 à partir de la face interne de l'épaulement annulaire 20. Cette partie mâle 24 présente à son extrémité un bourrelet extérieur 25 dont l'utilité sera expliquée plus loin.

Un piston 30, d'axe 4, ayant un alésage interne fileté 31 destiné à coopérer avec le filetage 23, loge dans la cavité 15 du corps de cylindre 5. Ce piston 30 globalement cylindrique comporte sur sa périphérie deux nervures 32a, 32b parallèles à l'axe 4 et logeant dans les rainures 11 a et 11 b ménagées dans la paroi cylindrique interne du corps de cylindre 5. On conçoit que la rotation de la broche 16 entraîne un mouvement axial parallèle à l'axe 4 du piston 30, les rainures 11a et 11b servant de guidage aux nervures 32a et 32b.

La face du piston 30 située en vis-à-vis de l'épaulement annulaire 20 de la broche 16 comporte un évidement annulaire 33 de section sensiblement complémentaire à la section de la partie mâle 24, qui comporte une zone rétrécie 34 destinée à coopérer avec le bourrelet 25. La paroi du bouchon 30 qui entoure l'évidement annulaire 33 a un diamètre extérieur légèrement inférieur au diamètre de la cavité 15, afin de permettre au bourrelet 25 de franchir la zone rétrécie 34 par déformation élastique de cette paroi, lorsque le charnon mobile 3 se trouve dans la position extrême d'ouverture de l'ouvrant. Cette disposition particulière permet de verrouiller le charnon mobile 3 dans une position fixe en fin de mouvement non freiné. Cela est particulièrement utile, si la cartouche selon l'invention freine le mouvement de descente par son propre poids d'un panneau fixé à un charnon mobile 3 pivotable autour d'un axe 4 horizontal. Cette fonction est possible notamment grâce à l'élasticité du matériau employé pour la réalisation du piston 30, ce matériau étant une matière plastique synthétique qui peut être identique pour toutes les pièces constitutives de la cartouche à l'exception du joint d'étanchéité 21.

Ainsi que cela se voit clairement sur les figures 1 et 4, le piston 30 comporte une pluralité d'orifices 35 parallèles à l'axe 4 et qui servent au transfert d'un fluide hydraulique entre les chambres 36, 37, de volume variable, de la cavité 15, séparées par le piston 30. Ces orifices 35 débouchent dans le fond de l'évidement annulaire 33 et sur la face 38 du piston 30 disposée en vis-à-vis du fond 9. Les orifices 35 sont tous disposés du même côté d'un plan radial du piston 30 passant par l'axe 4, et la face 38 est équipée d'un clapet 40, sous forme d'une rondelle, qui comporte une excroissance 41 destinée à coopérer avec une cavité 42 ménagée dans la face 38 du côté éloigné des orifices 35.

Le clapet 40 est réalisé de préférence en une matière plastique synthétique identique au matériau constitutif du piston 30, et soudable par ultrasons. L'excroissance 41 est soudée dans la cavité 42.

Lorsque par suite de la rotation de la broche 16, le piston 30 s'éloigne du fond 9, l'huile contenue dans la chambre 37 s'écoule par les orifices 35 vers la chambre 36. La surpression régnant dans la chambre 37 permet d'écarter le clapet 40 de la face 38 du piston 30.

Dans cette configuration, qui correspond en général à l'ouverture du dormant, l'huile s'écoule librement de la chambre 37 vers la chambre 36.

En revanche, lorsque le piston 30 se rapproche du fond 9, par suite de la rotation inverse du charnon mobile 3, il se produit une suppression dans la chambre 36 qui plaque le clapet 40 contre la face 38 du piston 30, ce qui obture les orifices 35. Dans ce cas, l'huile s'écoule par les jeux périphériques entre le piston 30 et la paroi interne du corps de cylindre 5 et par les jeux entre la partie filetée 22 de la broche 16 et le filetage 31 du piston 30. Ces restrictions de section de passage d'huile entraîne un freinage du mouvement de fermeture de l'ouvrant.

De manière avantageuse, le corps de cylindre 5 et le bouchon 13 sont également réalisés en une matière plastique synthétique et sont fixés entre eux au moyen d'une soudure par ultrasons.

La broche 16 est elle-même réalisée dans la même matière plastique synthétique.

Le dispositif de freinage comporte ainsi uniquement cinq pièces en matière synthétique et un joint d'étanchéité 21. Ces cinq pièces sont : le corps de cylindre 5 et le bouchon 13 soudés entre eux par ultrasons après montage, le piston 30 et le clapet 40 soudés entre eux par ultrasons et la broche monobloc 13.

## Revendications

1. Dispositif hydraulique pour freiner le mouvement de rotation d'un charnon mobile (3) d'une charnière par rapport à un charnon fixe (2) dans un sens, comportant un corps de cylindre (5) solidaire du charnon fixe (2), une broche (16) montée à rotation sur le corps de cylindre (5) et immobilisée axialement par rapport à ce dernier, ladite broche présentant, à l'extérieur du corps de cylindre (5), une partie externe (17) solidaire du charnon mobile (3) et, à l'intérieur du corps de cylindre (5), une partie filetée (22), un piston (30) monté coulissant dans la cavité interne (15) du corps de cylindre (5) et immobilisé en rotation par rapport au corps de cylindre, ledit piston (30) partageant ladite cavité (15) en deux chambres (36, 37) de volume variable, ce piston (30) comportant un filetage interne (31) coopérant avec la partie filetée (22) de la broche (16), et des moyens pour permettre un transfert de fluide hydraulique entre les deux chambres (36, 37), lors du déplacement du piston (30) par suite de la rotation du charnon mobile (3), de manière contrôlée dans un sens de rotation du charnon mobile (3) et de manière libre dans l'autre sens,
**caractérisé par le fait qu'**il se présente sous la forme d'une cartouche amovible séparable des charnons (2, 3), le corps de cylindre (5) et la partie de broche (17) située à l'extérieur du corps de cylindre (5) comportant des surfaces périphériques ayant des génératrices sensiblement parallèles à l'axe (4) de la broche, et des contours non circulaires dans des plans perpendiculaires à l'axe (4) de la broche, lesdites surfaces périphériques étant destinées à coopérer avec des surfaces internes complémentaires formées respectivement dans le charnon fixe (2) et le charnon mobile (3), ladite cartouche jouant ainsi également le rôle d'axe de l'articulation.

2. Dispositif selon la revendication 1, **caractérisé par le fait que** le corps de cylindre (5) est susceptible d'être immobilisé dans la charnon fixe (2) au moyen d'une rainure (8) coopérant avec une nervure (7).

3. Dispositif selon la revendication 2, **caractérisé par le fait que** la nervure (7) est formée sur le corps de cylindre (5).

4. Dispositif selon l'une quelconque des revendications 1 à 3, **caractérisé par le fait que** la partie de broche située à l'extérieur du corps de cylindre (5) se présente sous la forme d'un fût cannelé (17).

5. Dispositif selon l'une quelconque des revendications 1 à 4, **caractérisé par le fait qu'**il comporte en outre des moyens pour immobiliser la broche (16) dans une position extrême de rotation du charnon mobile (3).

6. Dispositif selon la revendication 5, **caractérisé par le fait que** les moyens d'immobilisation de la broche (16) comportent un évidement annulaire (33) formé sur une face d'extrémité du piston (30), qui s'encliquette avec une partie mâle (24) correspondante formée sur la broche (16).

7. Dispositif selon la revendication 5, **caractérisé par le fait que** la broche ((16) comporte, dans la cavité (15) du corps de cylindre (5), un épaulement annulaire (20) en appui contre un bouchon (13) de fermeture du corps de cylindre (5), traversé par la broche (16), et **par le fait que** la partie mâle (24) s'étend à partir dudit épaulement annulaire (20).

8. Dispositif selon l'une quelconque des revendications 1 à 7, **caractérisé par le fait que** les moyens pour permettre le transfert du fluide hydraulique comporte des orifices (35) ménagés dans le piston (30) et un clapet (40), sous forme de rondelle, fixé sur une face d'extrémité (36) du piston (30).

9. Dispositif selon l'une quelconque des revendications 1 à 8, **caractérisé par le fait que** les éléments constitutifs de la cartouche sont réalisés en une matière plastique synthétique.

10. Dispositif selon la revendication 9, dans lequel le corps de cylindre (5) comporte un bouchon (13) de fermeture traversé par la broche (16), et le piston (30) est équipé d'un clapet (40), **caractérisé par le fait que** le bouchon (13) est fixé au corps de cylindre (5), et le clapet (40) est fixé au piston (30) au moyen de soudures par ultrasons.

## Patentansprüche

1. Hydraulische Vorrichtung zum Bremsen der Rotationsbewegung eines beweglichen Scharnierteils (3) eines Scharniers bezüglich eines festen Scharnierteils (2) in einer Richtung, die einen Zylinderkörper (5), der mit dem festen Scharnierteil (2) formschlüssig verbunden ist, einen Scharnierstift (16), der drehbar auf dem Zylinderkörper (5) montiert und axial unbeweglich bezüglich letzterem gemacht ist, wobei der Scharnierstift, außerhalb des Zylinderkörpers (5), ein äußeres Teil (17) aufweist, das mit dem beweglichen Scharnierteil (3) formschlüssig verbunden ist und innerhalb des Zylinderkörpers (5) ein mit Gewinde versehenes Teil (22), einen Kolben (30), der in der inneren Vertiefung (15) des Zylinderkörpers (5) gleitend befestigt und hinsichtlich Rotation bezüglich des Zylinderkörpers unbeweglich ist, aufweist, wobei der Kolben (30) die Vertiefung (15) in zwei Kammern (36, 37) mit variablem Volumen unterteilt, wobei dieser Kolben (30) ein inneres Gewinde (31) aufweist, das mit dem mit Gewinde versehenen Teil (22) des Schamierstifts (16) zusammenwirkt, und Mittel aufweist, um einen Transfer von hydraulischer Flüssigkeit zwischen den beiden Kammern (36, 37) beim Bewegen des Kolbens (30) in Folge der Rotation des beweglichen Scharnierteils (3) zu ermöglichen, und zwar kontrolliert in Rotationsrichtung des beweglichen Scharnierteils (3) und frei in der anderen Richtung,
**dadurch gekennzeichnet, dass** sie sich in Form einer von den Scharnierteilen (2, 3) trennbaren, ablösbaren Patrone präsentiert, wobei der Zylinderkörper (5) und das Teil (17) des Scharniers, das außerhalb des Zylinderkörpers (5) liegt, periphere Flächen aufweist, die zur Achse (4) des Scharnierstifts im Wesentlichen parallele Erzeugende und Konturen aufweisen, die in Ebenen senkrecht zur Achse (4) des Scharnierstifts nicht kreisförmig sind, wobei die peripheren Flächen dazu bestimmt sind, mit inneren Flächen zusammenzuwirken, die zusätzlich jeweils in dem festen Scharnierteil (2) und dem beweglichen Schamierteil (3) gebildet sind, wobei die Patrone so auch die Rolle des Gelenks spielt.

2. Vorrichtung nach Anspruch 1, **dadurch gekennzeichnet, dass** der Zylinderkörper (5) in dem festen Scharnierteil (2) mittels einer mit einer Rippe (7) zusammenwirkenden Rille (8) unbeweglich gemacht werden kann.

3. Vorrichtung nach Anspruch 2, **dadurch gekennzeichnet, dass** die Rippe (7) auf dem Zylinderkörper (5) gebildet ist.

4. Vorrichtung nach einem der Ansprüche 1 bis 3, **dadurch gekennzeichnet, dass** der Teil des Scharnierstifts, der außerhalb des Zylinderkörpers (5) liegt, sich in Form eines gerippten Schafts (17) zeigt.

5. Vorrichtung nach einem der Ansprüche 1 bis 4 **dadurch gekennzeichnet, dass** sie außerdem Mittel zum Immobilisieren des Scharnierstifts (16) in einer äußeren Endrotationsstellung des beweglichen Scharnierteils (3) aufweist.

6. Vorrichtung nach Anspruch 5, **dadurch gekennzeichnet, dass** die Mittel zur Immobilisierung des Schamierstifts (16) eine ringförmige Aussparung (33) aufweisen, die auf einer Endseite des Kolbens (30) gebildet ist, der mit einem auf dem Scharnierstift (16) gebildeten, entsprechenden Stiftteil (24) einrastet.

7. Vorrichtung nach Anspruch 5, **dadurch gekennzeichnet, dass** der Schamierstift (16), in der Vertiefung (15) des Zylinderkörpers (5), eine ringförmige Schulter (20) aufweist, die gegen einen Verschluss (13) zum Verschließen des Zylinderkörpers (5), der von dem Scharnierstift durchquert wird, drückt, und dadurch, dass das Stiftteil (24) sich ausgehend von der ringförmigen Schulter (20) erstreckt.

8. Vorrichtung nach einem der Ansprüche 1 bis 7, **dadurch gekennzeichnet, dass** die Mittel, die den Transfer der hydraulischen Flüssigkeit ermöglichen, Öffnungen (35), die in dem Kolben (30) angeordnet sind, und eine Klappe (40) in Form einer Scheibe aufweisen, die auf einer Endseite (36) des Kolbens (30) befestigt ist.

9. Vorrichtung nach einem der Ansprüche 1 bis 8, **dadurch gekennzeichnet, dass** die die Patrone bildenden Elemente aus einem synthetischen Kunststoff hergestellt sind.

10. Vorrichtung nach Anspruch 9, in der der Zylinderkörper (5) einen von dem Scharnierstift (16) durchquerten Verschluss (13) aufweist, und der Kolben (30) mit einer Klappe (40) versehen ist, **dadurch gekennzeichnet, dass** der Verschluss (13) am Zylinderkörper (5) befestigt und die Klappe (40) am Kolben (30) mittels Verschweißungen durch Ultraschall befestigt ist.

## Claims

1. Hydraulic device for braking the rotary motion of a. moveable knuckle (3) of a hinge relative to a fixed knuckle (2) in one direction, including a cylinder body (5) rigidly attached to the fixed knuckle (2), a pin (16) mounted for rotation on the cylinder body (5) and axially immobilised relative to the latter, the said pin having, outside the cylinder body (5), an external part (17) rigidly attached to the moveable knuckle (3) and, inside the cylinder body (5), a threaded part (22), a piston (30) mounted slidably in the internal cavity (15) of the cylinder body (5) and immobilised in rotation relative to the cylinder body, the said piston (30) dividing the said cavity (15) into two chambers (36, 37) of variable volume, this piston (30) including an internal thread (31) co-operating with the threaded part (22) of the pin (16), and means for allowing transfer of hydraulic fluid between the two chambers (36, 37), on displacement of the piston (30) as a result of the rotation of the moveable knuckle (3), in controlled manner in one direction of rotation of the mobile knuckle (3) and freely in the other direction,
**characterised by** the fact that it is in the form of a detachable cartridge separable from the knuckles (2, 3), the cylinder body (5) and the pin part (17) situated outside the cylinder body (5) including peripheral surfaces having generatrices substantially parallel with the axis (4) of the pin, and non-circular outlines in planes perpendicular to the axis (4) of the pin, the said peripheral surfaces being intended to co-operate with complementary internal surfaces formed in the fixed knuckle (2) and the moveable knuckle (3) respectively, the said cartridge thus also acting as the hinge axis.

2. Device as described in claim 1, **characterised by** the fact that the cylinder body (5) is able to be immobilised in the fixed knuckle (2) by means of a groove (8) co-operating with a rib (7).

3. Device as described in claim 2, **characterised by** the fact that the rib (7) is formed on the cylinder body (5).

4. Device as described in any one of claims 1 to 3, **characterised by** the fact that the pin part situated outside the cylinder body (5) is in the form of a fluted shaft (17).

5. Device as described in any one of claims 1 to 4, **characterised by** the fact that it also includes means for immobilising the pin (16) in a position of limit of rotation of the mobile knuckle (3).

6. Device as described in claim 5, **characterised by** the fact that the means for immobilisation of the pin (16) include an annular cavity (33) formed on an end face of the piston (30), which snap-fits with a corresponding male part (24) formed on the pin (16).

7. Device as described in claim 5, **characterised by** the fact that the pin (16) includes, in the cavity (15) of the cylinder body (5), an annular shoulder (20) bearing against a plug (13) for closure of the cylinder body (5), through which the pin (16) passes, and by the fact that the male part (24) extends from the said annular shoulder (20).

8. Device as described in any one of claims 1 to 7, **characterised by** the fact that the means for allowing transfer of the hydraulic fluid includes orifices (35) provided in the piston (30) and a valve (40), in washer form, fixed on an end face (36) of the piston (30).

9. Device as described in any one of claims 1 to 8, **characterised by** the fact that the elements forming the cartridge are made of a synthetic plastics material.

10. Device as described in claim 9, in which the cylinder body (5) includes a closure plug (13) through which the pin (16) passes, and the piston (30) is provided with a valve (40), **characterised by** the fact that the plug (13) is fixed to the cylinder body (5) and the valve (40) is fixed to the piston (30) by means of ultrasonic welds.
